# EUROPEAN PATENT SPECIFICATION

(11) **EP 2 936 044 B1**
(45) Date of publication and mention of the grant of the patent: **11.01.2017**
(21) Application number: 12826609.5
(22) Date of filing: 18.12.2012
(51) Int. Cl.: F41H 5/04

(54) **PROTECTIVE DEVICE**
SCHUTZVORRICHTUNG
DISPOSITIF DE PROTECTION

(43) Date of publication of application: 28.10.2015
(73) Proprietor: Tawazun Holding Company LLC, Abu Dhabi (AE)
(72) Inventor: CIOFFI, Cosimo, 50050 Cerreto Guidi (FI) (IT)
(74) Representative: Mati, Silvia
(86) International application number: PCT/IT2012/000385
(87) International publication number: WO 2014/097327

(56) References cited:
- GB-A- 122 370
- GB-A- 543 645
- GB-A- 2 408 016
- US-A- 3 736 838
- US-A- 5 014 593
- US-A1- 2011 162 515
- US-A1- 2011 233 869
- ROLAND C M ET AL: "Elastomer@?steel laminate armor", COMPOSITE STRUCTURES, ELSEVIER SCIENCE LTD, GB, vol. 92, no. 5, 1 April 2010 (2010-04-01), pages 1059-1064, XP026834464, ISSN: 0263-8223 [retrieved on 2009-10-04]

## Description

### Technical Field

This invention relates to a protective device, in particular for objects or structures against shock waves, to protect persons or objects inside.

### Background Art

Protective devices are known, for example in patent application nos. WO2007/042877 and WO2010/049802 in the name of the same Applicant and having the same inventor as this invention.

These structures have a core made of resistant material and an outer coating which can be perforated made of polymeric material.

The resistant core is made from a material which is able to resist a perforating body, and, for that purpose, it can be made, for example, from a steel pate stiffened with circling crosspieces.

The polymeric coating layer is, on the other hand, designed to break when penetrated by the perforating body so as to constitute an obstacle to the rebounding of the perforating body after the impact against the resistant core.

These prior art devices, although they operate in an optimum manner from the point of view of resistance to perforating bodies, are not specifically designed to resist impacts such as, in particular, those generated by shock waves from explosions.

The necessary resistance to the perforating bodies (the action of which is concentrated in a small localised area) requires that the materials used for the resistant core has a high degree of hardness, even at the expense of the overall fragility of the resistant core. Amongst the materials used there are, for example, certain hardened glasses or fibre cement.

The above-mentioned fragility makes this type of structure unsuitable for resistance against impacts, such as shock waves caused by explosions, since the hardness provided by the materials used does not have a protective effect against the impact and the structure, therefore, is not sufficiently effective for this type of use.

Document GB 2 408 016 describes a structural sandwich member for improving ballistics and/or blast resistance which comprises a core of plastics or polymer material with an interlayer which may be a solid or perforated metal plate, a metal mesh, hard ceramic or a high tensile strength fabric.

### Disclosure of the Invention

The aim of this invention is therefore to provide a protective device which is effective against the effects of shock waves (the so-called "blast wave" effect).

This invention also relates to a method for making the protection device.

### Brief Description of the Drawings

Further features and advantages of the invention are more apparent in the non-limiting description which follows of a preferred non-limiting embodiment of the invention illustrated in the accompanying drawings, in which:
- Figure 1 shows a schematic transversal cross section of a protection device according to this invention;
- Figure 2 shows a second application of a device of Figure 1.
- Figure 3 shows a third application of a device according to this invention and
- Figure 4 shows a fourth application of a device according to this invention.

### Detailed Description of the Preferred Embodiments of the Invention

The accompanying drawings show a protective device according to this invention comprising a protective structure 1.

The structure 1 comprises a first, internal, resistant layer 2, forming the resistant layer of the structure 1.

The internal layer 2 is made of an elastic steel, that is to say, a steel having a metallurgical structure and heat treatments for improving the elastic characteristics.

The steel has a failure load equal to or greater than approximately 30,000 kg/cm² and it is perfectly elastic (that is to say, with complete elastic return without yield or permanent deformations) between 0 and at least 10.000 kg/cm².

The above-mentioned resistance values are considered to be obtained by a plate having a thickness of 6-8 mm.

In a preferred embodiment, the steel used for the inner layer 2 is a hardened and tempered, non-ballistic steel (the term "non-ballistic" means a particularly hard and very fragile steel due to the high content of manganese.

Preferably, the steel used has a hardness lower than that of ballistic steel. More specifically, the steel used has a hardness of less than 72 HRC. The first layer 2 has a thickness of between 1 and 10 millimetres, preferably 7 millimetres.

The structure 1 also comprises a second layer 3 positioned in contact with the first layer 2 and made from a polymeric material (containing polymers, co-polymers or a blend).

Preferably, the polymeric material used for the second layer 3 is a material selected amongst polyamide, polyurethane, polypropylene, polyvinyl chloride (PVC) and derivatives of these materials (that is, a composition of predetermined percentages of two or more of the above-mentioned materials).

Preferably, the second layer 3 has a thickness of between 6 and 9 millimetres.

### The second layer

Advantageously, the first layer comprises a series of passages 7 designed to receive the second layer 3 for obtaining a coupling of the layers 2 and 3 which are not mutually slidable.

In effect, the layer 3 is fixed to the layer 2 not only due to the contact on the lateral surfaces 8 but also inside the passages 7.

Preferably, the structure 1 also comprises a coating layer 4 positioned to cover the first and the second layer 2, 3.

The coating layer 4 is made from a polymeric material, preferably comprising rubber or nylon and yet more preferably having nylon-based polyamides, polyethylenes or polyurethanes and containing a percentage of rubber of between 20% and 40%.

Preferably, the coating layer 4 has a thickness of between 4 and 20 millimetres.

Advantageously, the second layer 3 comprises protrusions 9 on the relative outer surface so as to obtain a complete coupling with the coating layer 4.

Thanks to the use of the above-mentioned materials, the layers 2, 3, 4 are slidably coupled to each other and therefore provide a considerable collaboration in the bending strength. This configuration allows a deflection which is greater than that of a structure with the same layers but positioned in such a way that the tangential sliding is free.

In other words, the materials constituting the various layers 2, 3, 4 link together, thereby increasing the mutual coupling.

Advantageously, the second layer 3 and the coating layer 4 are positioned on the layer 2 by thermal die-casting.

In this way an increase in the impact strength and the absorption of the total kinetic energy of the entire protective device is obtained whilst at the same time maintaining a high elasticity.

This results in a greater energy absorption capacity, which is particularly useful in the absorption of shock waves, for example due to earthquakes, explosions or fires.

In addition, the presence of the second layer 3 provides an anti-rebound effect which is able to retain any fragments transported by the shock wave, thereby preventing them from rebounding on the second resistant layer 2 and being reintroduced into the surrounding environment. According to this invention, the above-mentioned protective device 1 can be applied to various types of clothing, such as vests or in general to other types of self-protection clothing, to vehicles, boats, aircraft or fixed structures such as, for example, engine or turbine testing buildings or cabins, so as to prevent the released parts, in the event of failure of the engine or the turbine, from darting without control into the environment and rebounding on the walls, reaching other objects or operators present. In a preferred embodiment, a method for making the protective device comprises a first step of applying, by moulding (thermal die-casting), the second layer 3 to the first layer 2 to obtain a semi-finished product co-moulded in two layers, and a subsequent step of moulding (thermal die-casting) the coating layer 4 on the above-mentioned semi-finished product.

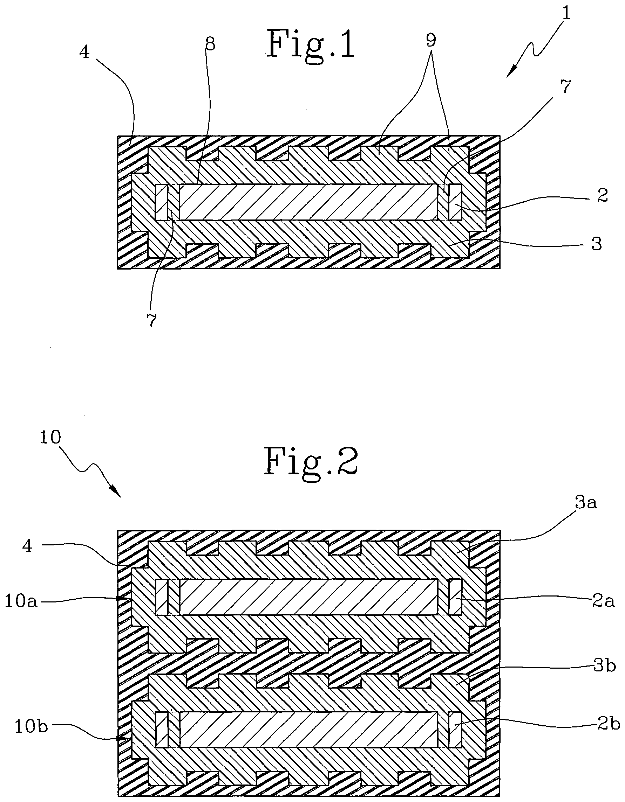

Figure 2 schematically shows a second embodiment of a protective device comprising a structure 1 comprising a first 2a and a second 2b resistant layer on which are individually positioned, advantageously by thermal die-casting, a respective first 3a and second 3b polymeric layer so as to obtain two modules 10a, 10b.

Then, the two above-mentioned semi-finished products 10a and 10b are completely wrapped by a shared coating layer 4 so as to obtain a single module10.

It is understood that the number of resistant layers 2 and polymeric layers 3 can also be greater than two depending on the specific conditions to which the object (clothing, vehicle, building...) designed to be protected by the structure 1 according to this invention must resist.

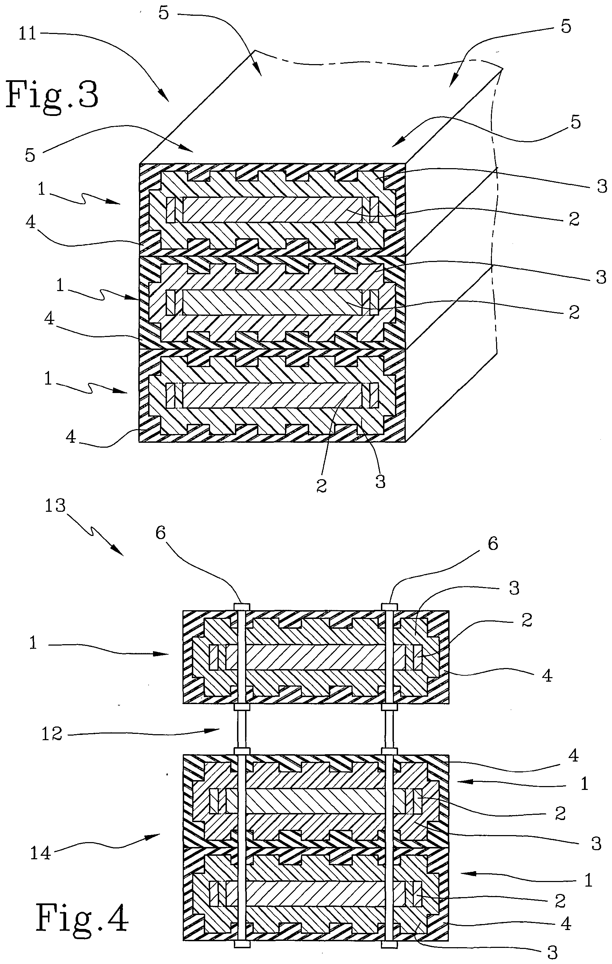

Figure 3 schematically shows a third embodiment of a protective device 1 comprising a plurality of structures 1 coupled by means of through fixing elements 5 to obtain a coupling 11, for example rigid connecting bars passing through the structures 1.

This solution enables the resistance values of the coupling 11 to be modulated depending on the specific conditions to which the object (clothing, vehicle, building...) designed to be protected by the device according to this invention must resist.

Figure 4 schematically shows a further embodiment of a protective device comprising a first structure 1 connected to a module 10 (as described with reference to Figure 2) or to a coupling 11 (as described with reference to Figure 3) or to a single structure 1, by means of connecting means 6, for example threaded rigid bars.

Between the structure 1 and the module 10 (or the coupling 11) the solution comprises at least one gap 12, advantageously of 2-30 cm.

The gap is advantageously filled with a gas, preferably air.

As well as modulating the resistance values of the entire device, increasing or decreasing the resistant layers 1 of which it is composed, this solution also allows another advantage to be obtained in terms of dispersion of the shock wave due to explosions or fires.

More specifically, the presence of the gap 12 allows the shock wave to be provided with a lateral escape path, without, therefore, further stressing the rear part 14 of the protective device.

It is understood that the solution of Figure 4 can comprise a series of structures 1 and a series of modules 10 (or couplings 11) all interposed with respective gaps 12.

### This invention achieves the set aim.

The advantages achieved in terms of resistance to shock waves, in particular due to earthquakes, explosions or fires, consist in the fact that a protective device as described guarantees a sufficient deformability guaranteed mainly by the mechanical properties of the resistant layer made of steel, such as to maintain the structural integrity, that is to say, the resistance to the disgregation resulting from the blast.

At the same time, the effect of the presence of the second layer made of polymeric material allows stray fragments to be stopped, preventing the rebound on the resistant layer and thus preventing a dangerous reintroduction into the surrounding environment.

## Claims

1. A protective device comprising at least one protective structure (1), the structure comprising a first internal resistant layer (2) made from a steel and at least one second layer (3) made from polymeric material positioned in contact with the first layer (2) **characterized in that** the steel of which the first internal resistant layer (2) is made has a failure load equal to or greater than 30.000 kg/cm² and is perfectly elastic between 0 and at least 10.000 kg/cm².

2. The protective device according to claim 1 comprising a plurality of the structures (1) and also comprising connecting means (5, 6) for keeping the structures (1) joined together.

3. The protective device according to claim 2 **characterised in that** at least two of the structures (1) are spaced from each other by a gap (12) having a thickness of between 2 and 30 cm.

4. The protective device according to claim 3 wherein the gap is filled with a gas, preferably air.

5. The protective device according to any one of the preceding claims wherein the connecting means (5, 6) comprise a plurality of connecting bars (5, 6) passing through the protective structures (1).

6. The device according to claim 1 wherein the structure comprises at least one second layer (3) made from a polymeric material selected amongst polyamide, polyurethane, polypropylene, PVC and derivatives of these materials.

7. The device according to any one of the preceding claims, also comprising a third coating layer (4) made from a nylon-based polymeric material containing a percentage of rubber of between 20% and 40%.

8. The device according to any one of the preceding claims wherein the first resistant layer (2) comprises a plurality of passages (7) for the second layer (3).

9. The device according to any one of the preceding claims wherein the second layer (3) comprises a plurality of protrusions (9) for increasing the coupling force between the second layer (3) and the coating layer (4).

10. The device according to any one of the preceding claims wherein the first layer (2) has a thickness of between 1 and 10 millimetres and wherein the second layer (3) has a thickness of between 6 and 9 millimetres.

11. The device according to claim 4 wherein the third coating layer (4) has a thickness of between 4 and 20 millimetres.

12. The device according to any one of the preceding claims comprising at least two resistant layers (2a, 2b) coupled to at least two respective polymeric layers (3a, 3b) and held together by a single shared coating layer (4).

13. A process for making a protective device, comprising a step of preparing a first resistant layer (2) made from steel, and a subsequent step of moulding, on the first layer (2), at least one second layer (3) made from polymeric material, obtaining a structure with two layers **characterized in that** the steel used in the step of preparing a first resistant layer (2) has a failure load equal to or greater than 30.000 kg/cm² and is perfectly elastic between 0 and at least 10.000 kg/cm².

14. The process according to claim 13, also comprising a subsequent step of moulding, on the two-layer structure, a coating layer (4) made from a nylon-based polymeric material containing a percentage of rubber of between 20% and 40%.

15. The process according to claim 13 or 14 wherein the moulding steps comprise a thermal die-casting step.

## Patentansprüche

1. Schutzvorrichtung, umfassend wenigstens eine Schutzstruktur (1), wobei die Struktur eine erste widerstandsfähige Innenschicht (2) aus Stahl und wenigstens eine zweite Schicht (3) aus polymerem Material umfasst, die im Kontakt mit der ersten Schicht (2) angeordnet ist, **dadurch gekennzeichnet, dass** der Stahl, aus dem die erste widerstandsfähige Innenschicht (2) hergestellt ist, eine Fehlbelastung gleich oder höher 30.000 kg/cm2 aufweist und zwischen 0 und wenigstens 10.000 kg/cm2 vollkommen elastisch ist.

2. Schutzvorrichtung nach Anspruch 1, umfassend mehrere Strukturen (1) und ferner umfassend Verbindungsmittel (5, 6), um die Strukturen (1) miteinander verbunden zu halten.

3. Schutzvorrichtung nach Anspruch 2, **dadurch gekennzeichnet, dass** wenigstens zwei der Strukturen (1) durch einen Spalt (12) voneinander beabstandet sind, der eine Dicke zwischen 2 und 30 cm aufweist.

4. Schutzvorrichtung nach Anspruch 3, wobei der Spalt mit einem Gas, vorzugsweise mit Luft, gefüllt ist.

5. Schutzvorrichtung nach einem der vorstehenden Ansprüche, wobei die Verbindungsmittel (5, 6) mehrere Verbindungsstangen (5, 6) umfassen, die durch die Schutzstrukturen (1) hindurchgehen.

6. Vorrichtung nach Anspruch 1, wobei die Struktur wenigstens eine zweite Schicht (3) aus polymerem Material umfasst, ausgewählt aus der Gruppe Polyamid, Polyurethan, Polypropylen, PVC und Derivate dieser Materialien.

7. Vorrichtung nach einem der vorstehenden Ansprüche, ferner umfassend eine dritte Überzugsschicht (4) aus einem polymerem Material auf Nylonbasis, das einen Anteil von Gummi zwischen 20% und 40% enthält.

8. Vorrichtung nach einem der vorstehenden Ansprüche, wobei die erste widerstandsfähige Schicht (2) mehrere Durchgänge (7) für die zweite Schicht (3) umfasst.

9. Vorrichtung nach einem der vorstehenden Ansprüche, wobei die zweite Schicht (3) mehrere Auskragungen (9) zum Erhöhen der Koppelkraft zwischen der zweiten Schicht (3) und der Überzugsschicht (4) umfasst.

10. Vorrichtung nach einem der vorstehenden Ansprüche, wobei die erste Schicht (2) eine Dicke zwischen 1 und 10 Millimetern aufweist und wobei die zweite Schicht (3) eine Dicke zwischen 6 und 9 Millimetern aufweist.

11. Vorrichtung nach Anspruch 4, wobei die dritte Überzugsschicht (4) eine Dicke zwischen 4 und 20 Millimetern aufweist.

12. Vorrichtung nach einem der vorstehenden Ansprüche, umfassend wenigstens zwei widerstandfähige Schichten (2a, 2b), die jeweils mit wenigstens zwei polymeren Schichten (3a, 3b) gekoppelt sind und durch eine einzelne, geteilte Überzugsschicht (4) zusammen gehalten werden.

13. Verfahren zum Herstellen einer Schutzvorrichtung, umfassend einen Schritt des Vorbereitens einer ersten widerstandsfähigen Schicht (2) aus Stahl, und einen darauf folgenden Schritt des auf der ersten Schicht (2) vorgenommenen Formens von wenigstens einer zweiten Schicht (3) aus polymerem Material, wodurch eine Struktur mit zwei Schichten erhalten wird, **dadurch gekennzeichnet, dass** der Stahl, der in dem Schritt des Vorbereitens einer ersten widerstandsfähigen Schicht (2) verwendet wird, eine Fehlbelastung gleich oder höher 30.000 kg/cm2 aufweist und zwischen 0 und wenigstens 10.000 kg/cm2 vollkommen elastisch ist.

14. Verfahren nach Anspruch 13, ferner umfassend einen darauf folgenden Schritt des auf der zweischichtigen Struktur vorgenommenen Formens einer Überzugsschicht (4) aus einem polymeren Material auf Nylonbasis mit einem Gummianteil zwischen 20% und 40%.

15. Verfahren nach Anspruch 13 oder 14, wobei die Schritte des Formens einen Schritt des Thermo-Druckgießens umfassen.

## Revendications

1. Dispositif de protection comprenant au moins une structure de protection (1), la structure comprenant une première couche résistante interne (2) réalisée à partir d'un acier et au moins une deuxième couche (3) réalisée en matériau polymère, positionnée en contact avec la première couche (2), **caractérisé en ce que** l'acier avec lequel la première couche résistante interne (2) est réalisée a une charge de rupture égale ou supérieure à 30.000 kg/cm² et est parfaitement élastique entre 0 et au moins 10.000 kg/cm².

2. Dispositif de protection selon la revendication 1, comprenant une pluralité des structures (1) et comprenant également des moyens de connexion (5, 6) pour maintenir les structures (1) unies ensemble.

3. Dispositif de protection selon la revendication 2, **caractérisé en ce qu'**au moins deux des structures (1) sont espacées l'une de l'autre par un espace intermédiaire (12) ayant une épaisseur comprise entre 2 et 30 cm.

4. Dispositif de protection selon la revendication 3, dans lequel l'espace intermédiaire est rempli avec un gaz, de préférence de l'air.

5. Dispositif de protection selon l'une quelconque des revendications précédentes, dans lequel les moyens de connexion (5, 6) comprennent une pluralité de barres de connexion (5, 6) passant à travers les structures de protection (1).

6. Dispositif selon la revendication 1, dans lequel la structure comprend au moins une deuxième couche (3) réalisée à partir d'un matériau polymère sélectionné parmi le polyamide, le polyuréthane, le polypropylène, le PVC et des dérivés de ces matériaux.

7. Dispositif selon l'une quelconque des revendications précédentes, comprenant également une troisième couche de revêtement (4) réalisée à partir d'un matériau polymère à base de nylon contenant un pourcentage de caoutchouc compris entre 20% et 40%.

8. Dispositif selon l'une quelconque des revendications précédentes, dans lequel la première couche résistante (2) comprend une pluralité de passages (7) pour la deuxième couche (3).

9. Dispositif selon l'une quelconque des revendications précédentes, dans lequel la deuxième couche (3) comprend une pluralité de saillies (9) pour augmenter la force d'accouplement entre la deuxième couche (3) et la couche de revêtement (4).

10. Dispositif selon l'une quelconque des revendications précédentes, dans lequel la première couche (2) a une épaisseur comprise entre 1 et 10 millimètres et dans lequel la deuxième couche (3) a une épaisseur comprise entre 6 et 9 millimètres.

11. Dispositif selon la revendication 4, dans lequel la troisième couche de revêtement (4) a une épaisseur comprise entre 4 et 20 millimètres.

12. Dispositif selon l'une quelconque des revendications précédentes, comprenant au moins deux couches résistantes (2a, 2b) couplées à deux couches polymères respectives (3a, 3b) et maintenues ensemble par une unique couche de revêtement (4) commune.

13. Procédé pour réaliser un dispositif de protection, comprenant une étape de préparation d'une première couche résistante (2) réalisée en acier et une étape successive de moulage, sur la première couche (2), d'au moins une deuxième couche (3) réalisée en matériau polymère, en obtenant une structure avec deux couches, **caractérisé en ce que** l'acier utilisé dans l'étape de préparation d'une première couche résistante (2) a une charge de rupture égale ou supérieure à 30.000 kg/cm² et est parfaitement élastique entre 0 et au moins 10.000 kg/cm².

14. Procédé selon la revendication 13, comprenant également une étape successive de moulage, sur la structure à deux couches, d'une couche de revêtement (4) réalisée à partir d'un matériau polymère à base de nylon contenant un pourcentage de caoutchouc compris entre 20% et 40%.

15. Procédé selon la revendication 13 ou 14, dans lequel les étapes de moulage comprennent une étape de moulage sous pression thermique.
